# EUROPÄISCHE PATENTSCHRIFT

(11) **EP 2 102 379 B1**
(45) Veröffentlichungstag und Bekanntmachung des Hinweises auf die Patenterteilung: **26.06.2013**
(21) Anmeldenummer: 07803292.7
(22) Anmeldetag: 06.09.2007
(51) Int. Cl.: C23C 4/08, C23C 28/00, C23C 30/00, F01D 25/00, F01D 5/28

(54) **VERFAHREN ZUR BETREIBUNG EINER TURBINE MIT EINEM OXID AUF EINER METALLISCHEN SCHICHT UND EINE TURBINE**
METHOD FOR OPERATING A TURBINE WITH AN OXIDE ON A METALLIC LAYER AND A TURBINE
PROCÉDÉ D'UTILISATION D'UNE TURBINE QUI PRÉSENTE UN OXYDE SUR UNE COUCHE MÉTALLIQUE ET UNE TURBINE

(30) Priorität: 05.12.2006 EP 06025146
(43) Veröffentlichungstag der Anmeldung: 23.09.2009
(73) Patentinhaber: Siemens Aktiengesellschaft, 80333 München (DE)
(72) Erfinder: STAMM, Werner, 45481 Mülheim an der Ruhr (DE)
(86) Internationale Anmeldenummer: PCT/EP2007/059337
(87) Internationale Veröffentlichungsnummer: WO 2008/068069

(56) Entgegenhaltungen:
- EP-A- 1 127 959
- EP-A2- 1 273 681
- EP-A2- 1 600 518
- US-A- 4 414 249
- US-A- 5 856 027

## Beschreibung

Die Erfindung betrifft ein Verfahren zur Herstellung einer Turbinenschaufel mit einer oxidierten metallischen Schicht, eine Verwendung einer solchen Turbinenschaufel, eine Turbine und ein Verfahren zum Betreiben einer Turbine.

Turbinenschaufeln werden mit Schutzschichten, z.B. bestehend aus MCrAlX, versehen, um sie gegen Korrosion und/oder Oxidation zu schützen. Die Europäische Aumddung EP 1 127 959 A1 betrifft ein Schutzschichtsystem bestehend aus einer Al-Pt Haftschicht und wahlweise einer äußeren Wärmedämmschicht. Dies sind metallische Schichten, auf denen sich eine schützende Oxidschicht bildet.

Oft sind die sich bildenden Oxidschichten nicht ausreichend für einen Schutz.

Es ist daher Aufgabe der Erfindung oben genanntes Problem zu überwinden.

Die Aufgabe wird gelöst durch eine Turbine gemäß Anspruch 7 und durch ein Verfahren zum Betreiben einer Turbine gemäß Anspruch 1.

In den jeweiligen Unteransprüchen sind weitere vorteilhafte Maßnahmen aufgelistet, die in vorteilhafter Art und Weise miteinander kombiniert werden können.

Die Erfindung wird im Folgenden erläutert.

Es zeigen:

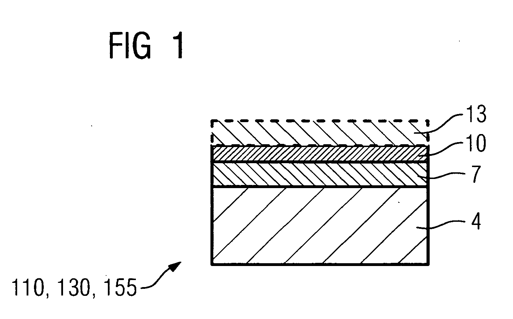

- Figur 1: ein Schichtsystem,
- Figur 2: eine Gasturbine,
- Figur 3: perspektivisch eine Turbinenschaufel,
- Figur 4: perspektivisch eine Brennkammer und
- Figur 5: eine Liste von Superlegierungen.

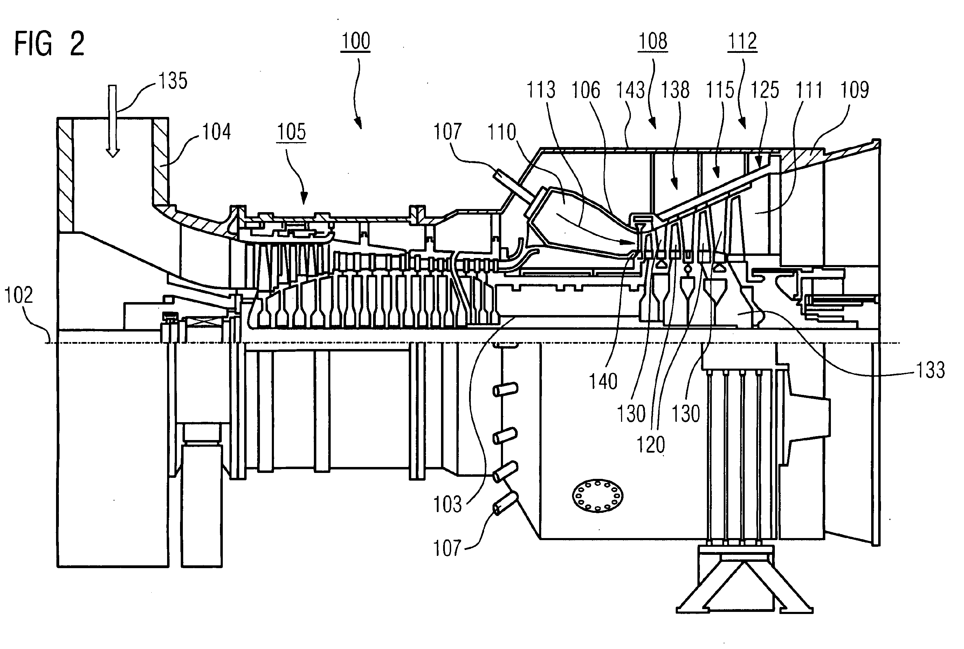

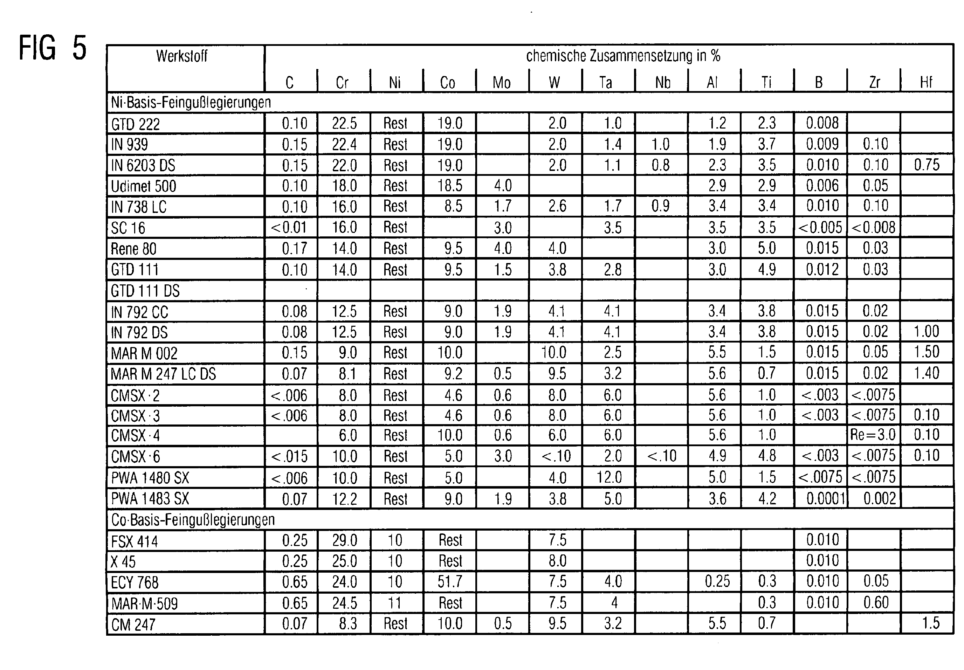

Auf ein metallisches Substrat 4, das insbesondere bei Bauteilen für Gasturbinen für Flugzeuge, für Verdichter oder für Gasturbinen 100 (Fig. 2) zur Stromerzeugung eine nickel- oder kobaltbasierte Superlegierung (Figur 5) darstellt, wird eine metallische Schutzschicht 7 aufgebracht. Diese metallische Schutzschicht 7 ist eine Legierung des Typs NiCoCr Alₓ.

Eine solche beschichtete Turbinenschaufel 120, 130 wird dann in die Gasturbine 100 eines Flugzeugs oder für eine stationäre Anwendung eingebaut, die während des Einsatzes oxidiert. Die Temperaturen, die die Turbinenschaufel 120, 130 im Einsatz in einer dritten oder vierten Stufe einer Gasturbine 100 erfährt, liegen vorzugsweise bei 900°C bis 950°C.

Die Turbine 100 weist im Turbinenbereich vorzugsweise vier Stufen aus Leit- 130 und Laufschaufeln 120 auf, wobei zumindest in der ersten Reihe, d.h. den Leit- 130 und Laufschaufeln 120, auf den Turbinenschaufeln 120, 130 eine keramische Wärmedämmschicht 13 aufgebracht ist. Insbesondere hat die Turbine 100 nur vier Stufen.

Erfindungsgemäß wird die metallische Schicht 7 vor dem Einsatz oxidiert und zwar bei Temperaturen, die oberhalb der Einsatztemperatur liegen, um mindestens 50°C, vorzugsweise um 50°C, d. h. in diesem Fall bei 950°C bis 1000°C. Durch die Anwendung erhöhter Temperaturen bildet sich in dem Fall der MCrAlX-Schichten ein stabiles α-Aluminiumoxid aus, die sich bei niedrigeren Einsatztemperaturen nicht ausbilden würde. Die dabei gebildete α-Aluminiumoxidschicht 10 zeigt den besten Antioxidationsschutz. Ist erst mal eine α-Al₂O₃-Schicht gebildet, so diese auch bei niedrigeren Temperaturen weiter.

Die Oxidation der metallischen Schicht 7 wird vorzugsweise in reduzierter Sauerstoffatmosphäre durchgeführt.
Dazu kann vorzugsweise die Oxidation in Stickstoff, Argon oder Helium oder in einem Schutzgasgemisch stattfinden. Ebenso kann bestimmter Wasserdampfdruck eingestellt werden, um die gewünschte Aluminiumoxidphase zu erreichen.
Der Sauerstoffpartialdruck liegt vorzugsweise bei 10⁻⁷ bar - 10⁻¹⁵ bar.

Auch wenn diese metallische Schicht 7 nicht als Over-Lay-Schicht verwendet wird, wie bei der dritten oder vierten Stufe einer stationären Gasturbine 100, kann das Verfahren auch angewendet werden,

Vorzugsweise wird das Verfahren mit folgenden MCrAlX-Beschichtungen (hier X = Y) durchgeführt:
Co-(27 - 29)Ni-(23 - 25)Cr-(9 - 11)Al-(0.5 - 0.7)Y,
insbesondere Co-28Ni-24Cr-10Al-0,6Y,
insbesondere mit Silizium (Si)
oder
Ni-(11 - 13)Co-(20 - 22)Cr-(10 - 12)Al-(0.3 - 0.5)Y-(1.5 - 2.5)Re,
insbesondere Ni-12Co-21Cr-11Al-0,4Y-2Re
oder
Ni-(24 - 26)Co-(16 - 18)Cr- (9 - 11)Al-(0.3 - 0.5)Y-(1.0 - 2.0)Re,
insbesondere Ni-25Co-17Cr-10Al-0,4Y-1,5Re
oder
Co-(29 - 31)Ni-(27 - 29)Cr-(7 - 9)Al-(0.5-0.7)Y-(0.6 - 0.8)Si,
insbesondere Co-30NI-28Cr-8Al-0.6Y-0.7Si.

Vorzugsweise besteht die Schicht 7 aus einer der oben genannten Legierungen.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt;

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

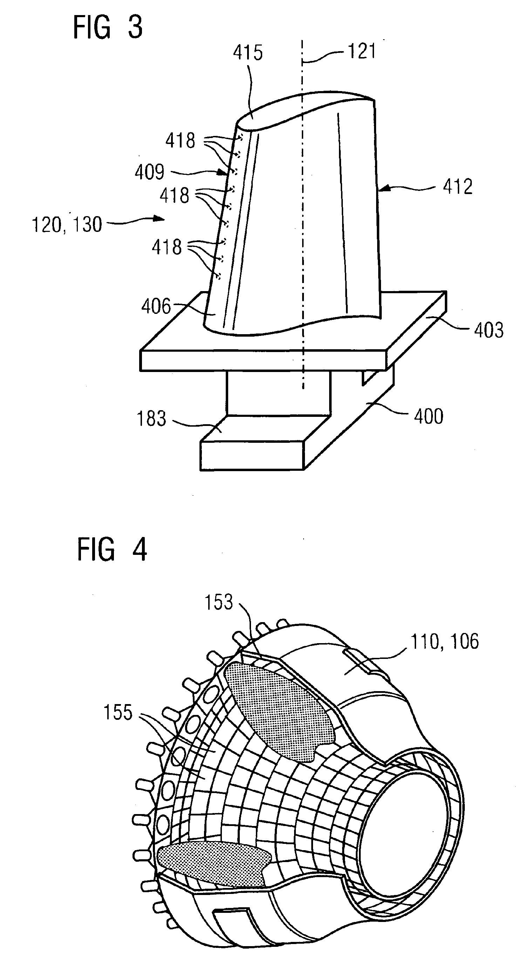

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt;

Ebenso können die Schaufeln 120, 130 Beschichtungen gegen Korrosion oder Oxidation aufweisen, z. B. (MCrAlX; M ist zumindest ein Element der Gruppe, Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer), vorzugsweise durch das erfindungsgemäße Verfahren

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) aüf.

Jedes Hitzeschildelement 155 aus einer Legierung ist arbeitsmediumsseitig mit einer besonders hitzebeständigen Schutzschicht (MCrAlX-Schicht ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe, Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1. Diese Schutzschicht wird erfindungsgemäß behandelt.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Betreiben einer Turbine (100),
die Turbinenschaufeln (120, 130) in der dritten und/oder der vierten Stufe mit einer oxidierten metallischen Schicht (7) aufweist,
wobei die Schaufeln (120, 130) der dritten und/oder vierten Stufe keine keramische Wärmedämmschicht aufweisen, bei dem die Temperatur zur Oxidbildung dieser Oxidschicht der metallischen Schicht (7) auf dieser Turbinenschaufel (120, 130)
bei 950°C bis 1050°C lag,
und bei dem die Einsatztemperatur der Turbinenschaufel in der dritten und/oder vierten Stufe (120, 130) um mindestens 50°C niedriger liegt als die Temperatur zur Oxidbildung dieser Oxidschicht der metallischen Schicht (7) auf dieser Turbinenschaufel (120, 130),
bei dem die metallische Schicht (7) eine Legierung des Typs NiCoCrAlX,
aufweist.

2. Verfahren nach Anspruch 1,
bei der die NiCocrAlX-Legierung eine Zusammensetzung aufweist (in wt%):
Co-(27 - 29)Ni-(23 - 25)Cr-(9 - 11)Al-(0.5 - 0.7)Y,
insbesondere Co-28Ni-24Cr-10Al-Y,
insbesondere mit Silizium (Si),
insbesondere bestehend aus
Co-(27 - 29)Ni-(23 - 25) Cr- (9 - 11)Al- (0.5 - 0.7)Y,
insbesondere bestehend aus Co-28Ni-24Cr-10Al-Y,
insbesondere mit Silizium (Si),
oder bei der die NiCoCrAlX-Legierung eine Zusammensetzung aufweist (in wt%):
Ni-(11 - 13)Co-(20 - 22)Cr-(10 - 12)Al-(0.3 - 0.5)Y-(1.5 - 2.5)Re,
insbesondere Ni-12Co-21Cr-11Al-Y-Re,
insbesondere bestehend aus
Ni-(11 - 13)Co-(20 - 22)Cr-(10 - 12)Al-(0.3 - 0.5)Y-(1.5 - 2.5)Re,
insbesondere bestehend aus Ni-12Co-21Cr-11Al-Y-Re,
oder bei der die NiCoCrAlX-Legierung eine Zusammensetzung aufweist (in wt%):
Ni-(24 - 26)Co-(16 - 18)Cr-(9 - 11)Al-(0.3 - 0.5)Y-(1.0 - 2.0)Re,
insbesondere Ni-25Co-17Cr-10Al-Y-Re,
insbesondere bestehend aus
Ni-(24 - 26)Co-(16 - 18) Cr- (9 - 11)Al- (0. 3 - 0. 5) Y- (1 . 0 - 2.0)Re,
insbesondere bestehend aus Ni-25Co-17Cr-10Al-Y-Re,
oder bei der die NiCoCrAlY-Legierung eine Zusammensetzung aufweist (in wt%) :
Co-(29 - 31)Ni-(27 - 29)Cr-(7 - 9)Al-(10.5-0.7)Y-(0.6 - 0.8)Si,
insbesondere Co-30Ni-28Cr-8Al-Y-Si,
insbesondere bestehend aus
Co-(29 - 31)Ni-(27 - 29)Cr-(7 - 9)Al-(10.5-0.7)Y-(0.6 - 0.8)Si,
insbesondere bestehend aus Co-30Ni-28Cr-8Al-Y-Si.

3. Verfahren nach Anspruch 1,
bei dem die Oxidation der metallischen Schicht (7) im Vakuum oder mit einem Sauerstoffpartialdruck deutlich kleiner als in Luft durchgeführt wird.

4. Verfahren nach Anspruch 3,
bei dem die Oxidation in einem Schutzgas durchgeführt wird,
insbesondere in Stickstoff, Argon und/oder Helium.

5. Verfahren nach Anspruch 3 oder 4,
bei dem ein Wasserdampf während der Oxidation verwendet wird.

6. Verfahren nach Anspruch 3,
bei dem der Sauerstoffpartialdruck zwischen 10⁻⁷ bar bis 10⁻¹⁵ bar liegt.

7. Turbine (100),
die aus einem Kompressor, einer Brennkammer (110) und einem Turbinenbereich besteht,
bei der die NiCoCrAlX-Beschichtungen der Schaufeln (120, 130) der dritten und vierten Stufe des Turbinenbereichs vor dem Einbau oxidiert sind,
insbesondere nach einem oder mehreren der in den Ansprüchen 1 bis 12 erwähnten Verfahrensschritten.

8. Turbine nach Anspruch 7,
die im Turbinenbereich vier Schaufelreihen aufweist, insbesondere im Turbinenbereich aus vier Schaufelreihen besteht,
wobei eine Schaufelreihe aus einer Scheibe mit Leit- (130) und einer Scheibe mit Laufschaufeln (120) besteht.

9. Turbine nach Anspruch 7 oder 8,
wobei zumindest die erste Schaufelreihe der Turbinenschaufeln (120, 130),
insbesondere die erste und zweite Schaufelreihe eine keramische Wärmedämmschicht (13) aufweisen.

10. Turbine nach Anspruch 7, 8 oder 9,
bei der die Schaufeln (120, 130) der dritten und vierten Stufe keine keramische Wärmedämmschicht aufweisen.

## Claims

1. Method for operating a turbine (100)
having turbine blades or vanes (120, 130) in the third and/or fourth stage which have an oxidized metallic layer (7),
wherein the blades or vanes (120, 130) of the third and/or fourth stage do not have a ceramic thermal barrier coating,
in which the oxide formation temperature of said oxide layer of the metallic layer (7) on said turbine blade or vane (120, 130)
was from 950°C to 1050°C,
and in which the operating temperature of the turbine blade or vane in the third and/or fourth stage (120, 130) is at least 50°C lower than the oxide formation temperature of said oxide layer of the metallic layer (7) on said turbine blade or vane (120, 130),
in which the metallic layer (7) comprises an alloy of the NiCoCrAlX type.

2. Process according to Claim 1,
in which the NiCoCrAlX alloy has a composition comprising (in % by weight):
Co- (27 - 29)Ni- (23 - 25) Cr- (9 - 11)Al- (0.5 - 0.7)Y,
in particular Co-28Ni-24Cr-10Al-Y,
in particular with silicon (Si),
in particular consisting of
Co- (27 - 29)Ni- (23 - 25) Cr- (9 - 11)Al- (0.5 - 0.7)Y,
in particular consisting of Co-28Ni-24Cr-10Al-Y,
in particular with silicon (Si),
or in which the NiCoCrAlX alloy has a composition comprising (in % by weight):
Ni-(11 - 13)Co-(20 - 22)Cr-(10 - 12)Al-(0.3 - 0.5)Y-(1.5 - 2.5)Re,
in particular Ni-12Co-21Cr-11Al-Y-Re,
in particular consisting of
Ni-(11 - 13)Co-(20 - 22)Cr-(10 - 12)Al-(0.3 - 0.5)Y-(1.5 - 2.5)Re,
in particular consisting of Ni-12Co-21Cr-11Al-Y-Re,
or in which the NiCoCrAlX alloy has a composition comprising (in % by weight):
Ni- (24 - 26) Co- (16 - 18) Cr- (9 - 11)Al- (0.3 - 0.5) Y- (1.0 - 2.0)Re,
in particular Ni-25Co-17Cr-10Al-Y-Re,
in particular consisting of
Ni- (24 - 26) Co- (16 - 18) Cr- (9 - 11)Al- (0.3 - 0.5) Y- (1.0 - 2.0)Re,
in particular consisting of Ni-25Co-17Cr-10Al-Y-Re,
or in which the NiCoCrAlY alloy has a composition comprising (in % by weight):
Co- (29 - 31) Ni- (27 - 29) Cr- (7 - 9)Al- (0.5 - 0.7) Y- (0.6 - 0.8)Si,
in particular Co-30Ni-28Cr-8Al-Y-Si,
in particular consisting of
Co- (29 - 31) Ni- (27 - 29) Cr- (7 - 9)Al- (0.5 - 0.7) Y- (0.6 - 0.8)Si,
in particular consisting of Co-30Ni-28Cr-8Al-Y-Si.

3. Process according to Claim 1,
in which the oxidation of the metallic layer (7) is carried out in vacuo or at an oxygen partial pressure significantly lower than in air.

4. Process according to Claim 3,
in which the oxidation is carried out under a shielding gas,
in particular under nitrogen, argon and/or helium.

5. Process according to Claim 3 or 4,
in which water vapor is used during the oxidation.

6. Process according to Claim 3,
in which the oxygen partial pressure is between 10⁻⁷ bar and 10⁻¹⁵ bar.

7. Turbine (100),
comprising a compressor, a combustion chamber (110) and a turbine region,
in which the NiCoCrAlX coatings on the blades or vanes (120, 130) of the third and fourth stages of the turbine region are oxidized before being installed,
in particular according to one or more of the method steps mentioned in Claims 1 to 12.

8. Turbine according to Claim 7,
which comprises four rows of blades or vanes in the turbine region,
in particular consists of four rows of blades or vanes in the turbine region,
wherein a row of blades or vanes comprises a disk with guide vanes (130) and a disk with rotor blades (120).

9. Turbine according to Claim 7 or 8,
wherein at least the first row of the turbine blades or vanes (120, 130),
in particular the first and second rows of blades or vanes, have a ceramic thermal barrier coating (13).

10. Turbine according to Claim 7, 8 or 9,
in which the blades or vanes (120, 130) of the third and fourth stages do not have a ceramic thermal barrier coating.

## Revendications

1. Procédé pour faire fonctionner une turbine (100),
qui a des aubes (120, 130) de turbine dans le troisième et/ou dans le quatrième étage ayant une couche (7) métallique oxydée,
des aubes (120, 130) du troisième et/ou du quatrième étage n'ayant pas de couche calorifuge en céramique, dans lequel la température de formation de l'oxyde de cette couche d'oxyde de la couche (7) métallique sur cette aube (120, 130) de turbine.
et va de 950°C à 1050°C,
dans lequel la température d'utilisation de l'aube de turbine dans le troisième et/ou dans le quatrième étage (120, 130) est plus basse d'au moins 50°C que la température de formation de l'oxyde de cette couche d'oxyde de la couche (7) métallique sur cette aube (120, 130) de turbine,
dans lequel la couche (7) métallique comporte un alliage du type NiCoCrAlX,

2. Procédé suivant la revendication 1,
dans lequel l'alliage NiCoCrAlX a une composition (en pourcentage en poids) :
Co- (27 - 29) Ni (23 - 25) Cr- (9 - 11)Al- (0, 5 - 0,7)Y,
notamment Co-28Ni-24Cr-10Al-Y,
en ayant notamment du silicium (Si),
en étant constitué notamment de
Co- (27 - 29) Ni (23 - 25) Cr- (9 - 11)Al- (0,5 - 0,7)Y,
en étant constitué notamment de Co-28Ni-24Cr-10Al-Y,
en ayant notamment du silicium,
ou dans lequel l'alliage NiCoCrAlX a une composition (en pourcentage en poids) :
Ni-(11-13)Co(20-22)Cr-(10-12)A1-(0,3-0,5)Y-(1,5-2,5)Re,
notamment Ni-12Co-21Cr-11Al-Y-Re,
en étant constitué notamment de Ni-(11-13)Co(20-22)Cr-(10- 2)Al-(0,3-0,5)Y-(1,5-2,5)Re,
ou dans lequel l'alliage NiCoCrAlX a une composition (en pourcentage en poids) :
Ni-(11-13)Co(20-22)Cr-(10-12)Al-(0,3- 0,5)Y-(1,5-2,5)Re,
notamment Ni-25Co-17Cr-10Al-Y-Re,
en étant constitué notamment de
Ni-(24-26)Co-(16-18)Cr-(9-11)Al-(0,3-0,5)Y-(1,0-2,0)Re,
en étant constitué notamment de Ni-25Co-17Cr-10Al-Y-Re
ou dans lequel l'alliage NiCoCrAlY a une composition (en pourcentage en poids)
Co-(29-31)Ni-(27-29)Cr-(7-9)Al-(10,5-0,7)Y-(0,6-0,8)Si,
notamment Co-30Ni-28Cr-8Al-Y-Si,
en étant constitué notamment de
Co-(29-31)Ni-(27-29)Cr-(7-9)Al-(10,5-0,7)Y-(0,6-0,8)Si,
en étant constitué notamment de Co-30Ni-28Cr-8Al-Y-Si.

3. Procédé suivant la revendication 1,
dans lequel on effectue l'oxydation de la couche (7) métallique sous vide ou sous une pression partielle d'oxygène nettement plus petite que dans l'air.

4. Procédé suivant la revendication 3,
dans lequel on effectue l'oxydation dans un gaz de protection,
notamment dans de l'azote, de l'arpon et/ou de l'hélium.

5. Procédé suivant la revendication 3 ou 4,
dans lequel on utilise une vapeur d'eau pendant l'oxydation.

6. Procédé suivant la revendication 3,
dans lequel la pression partielle d'oxygène est comprise entre 10⁻⁷ bar et 10⁻¹⁵ bar.

7. Turbine (100),
qui est constituée d'un compresseur, d'une chambre de combustion (110) et d'une zone de turbine,
dans laquelle les revêtements de NiCoCrAlX des aubes (120, 130) des troisième et quatrième étages de la zone de turbine sont oxydés avant le montage,
notamment par un ou par plusieurs des stades de procédé mentionnés dans les revendications 1 à 12.

8. Turbine suivant la revendication 7,
qui a quatre rangées d'aubes dans la zone de turbine,
en étant constituée notamment de quatre rangées d'aubes dans la zone de turbine,
dans laquelle une rangée d'aubes est constituée d'un disque ayant des aubes (130) directrices et d'un disque ayant des aubes (120) mobiles.

9. Turbine suivant les revendications 7 ou 8,
dans laquelle au moins la première rangée des aubes (120, 130) de turbine,
notamment la première et la deuxième rangées d'aubes a une couche (13) calorifuge en céramique.

10. Turbine suivant les revendications 7, 8 ou 9,
dans laquelle les aubes (120, 130) des troisième et quatrième étages n'ont pas de couche calorifuge en céramique.
